# EUROPEAN PATENT SPECIFICATION

(11) **EP 1 186 474 B1**
(45) Date of publication and mention of the grant of the patent: **30.07.2003**
(21) Application number: 01307598.1
(22) Date of filing: 07.09.2001
(51) Int. Cl.: B60R 1/072

(54) **Device for fixing a mirror holder to an adjustment mechanism**
Einrichtung zur Befestigung eines Spiegelhalters an einem Verstellmechanismus
Dispositif pour fixer un support de miroir d'un rétroviseur à un mécanisme de réglage

(30) Priority: 08.09.2000 BR 0004290
(43) Date of publication of application: 13.03.2002
(73) Proprietor: METAGAL INDUSTRIA E COMERCIO LTDA., Estado de Sao Paulo CEP:09990-090 (BR)
(72) Inventor: Miyabukuro, Pedro Takashi, Rua das Moncoes 61, Santo Andre, Estado de Sao Paulo (BR)
(74) Representative: Murgatroyd, Susan Elizabeth

(56) References cited:
- EP-A- 0 838 598
- DE-A- 3 144 547
- DE-A- 3 330 174
- US-A- 4 116 538
- US-A- 4 981 279
- PATENT ABSTRACTS OF JAPAN vol. 1997, no. 10, 31 October 1997 (1997-10-31) -& JP 09 156420 A (SAKAE RIKEN KOGYO KK), 17 June 1997 (1997-06-17)

## Description

The present invention relates to a rear view mirror of automotive vehicles and, in particular, to a fixing device for fixing a mirror cover to a control mechanism for adjusting the position of the mirror.

US-A-4 981 279 describes a device for fixing a mirror cover to a control mechanism comprising several spaced apart fixing parts and a universal gasket, the universal gasket being carried on the base of the control mechanism and having a groove, each fixing part comprising a flange carried on the edge of an opening in the mirror cover for supporting the base of the control mechanism, the flange having a wedge-shaped projection being arranged so as to couple with the groove.

External rear view mirrors of large size automotive vehicles, such as trucks, buses and the like, are already known, and essentially comprise a mirror plate set and a control mechanism for adjusting the position of the mirror, a mirror cover to which is fixed the mirror plate set and control mechanism, a housing which accommodates the control mechanism and mirror plate set together with other associated components and a support with its inside fixed to the body of the automotive vehicle so as to support the housing.

The mirror cover comprises a plate with one of its sides fixed to the mirror plate set and has a wide central circular opening in which is disposed the control mechanism which allows the adjustment of the mirror position either by manual actuation or by using an electric motor device. The control mechanism includes a universal gasket which has one part in the form of a ring shaped base to which is fixed the mirror cover using a fixing device and another part which is fixed in the bottom of the housing.

In the usual form of construction, the fixing device for fixing the control mechanism to the mirror cover is formed by at least three parts each in the form of a resilient hook and/or metallic spring which remain seated one to the other and are assembled in the control mechanism and mirror cover to one another.

Such fixing device is a complex structure, inconvenient and undesirable.

Another inconvenience of conventional fixing devices is that their assembly on the production line is difficult and undesirable.

Another problem concerns vibration of the mirror when it is in use. Vibration leads to the fatigue of the material of the fixing device and jeopardizes the optimum functioning of the mirror.

An object of the present invention is to provide a fixing device that alleviates the above problems.

Another object is to provide a fixing device that does not require substantial modifications to the mirror so as not to complicate the production process.

Yet another object is to provide a fixing device that can be obtained using simple resources and at low cost.

The present invention consists of a device for fixing a mirror cover to a control mechanism comprising at least three spaced apart fixing parts and a universal gasket , the universal gasket being carried on the base of the control mechanism and having a ring and a groove formed in the periphery of the ring , each fixing part comprising a flange carried on the edge of an opening formed in the mirror cover for supporting the base of the control mechanism , a stop projecting from the mirror cover and radially aligned and spaced apart from the flange, a seat comprising gutters and formed in the opposing faces of the flange and the stop and a hole formed in a region of the mirror cover within the space between the flange and the stop, and a pin, the flange having a cuneiform projection or wedge being arranged so as to couple with the groove of the ring and the pin being received under pressure through the hole and between the gutters and so as to press the projection against the groove of the ring when the projection is coupled with the groove.

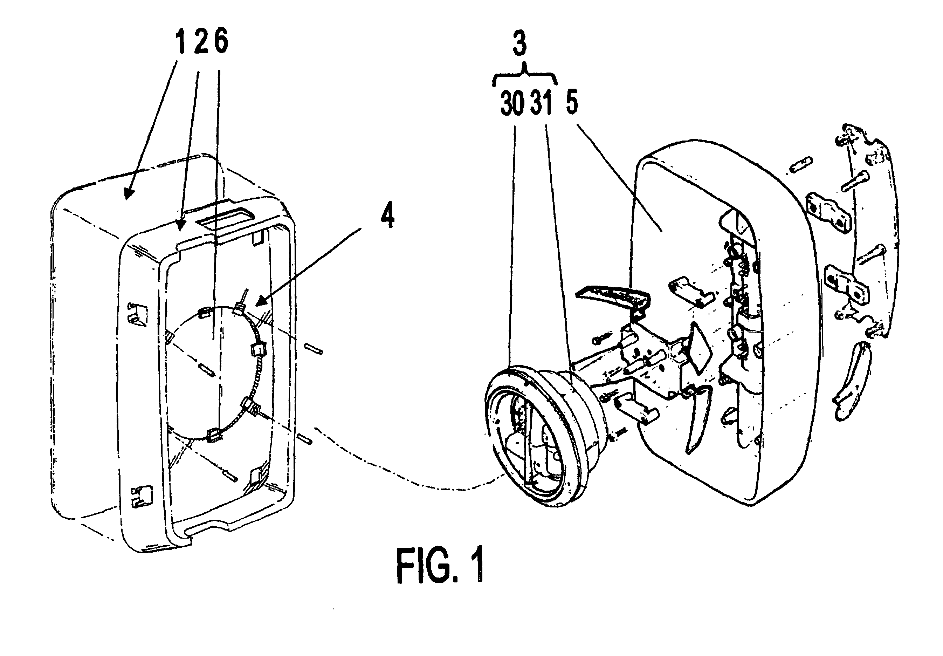

An embodiment of the present invention will now be described, by way of example, with reference to the accompanying drawings, in which:-
Fig. 1 shows an exploded view of a mirror in which an embodiment of the present invention is used;

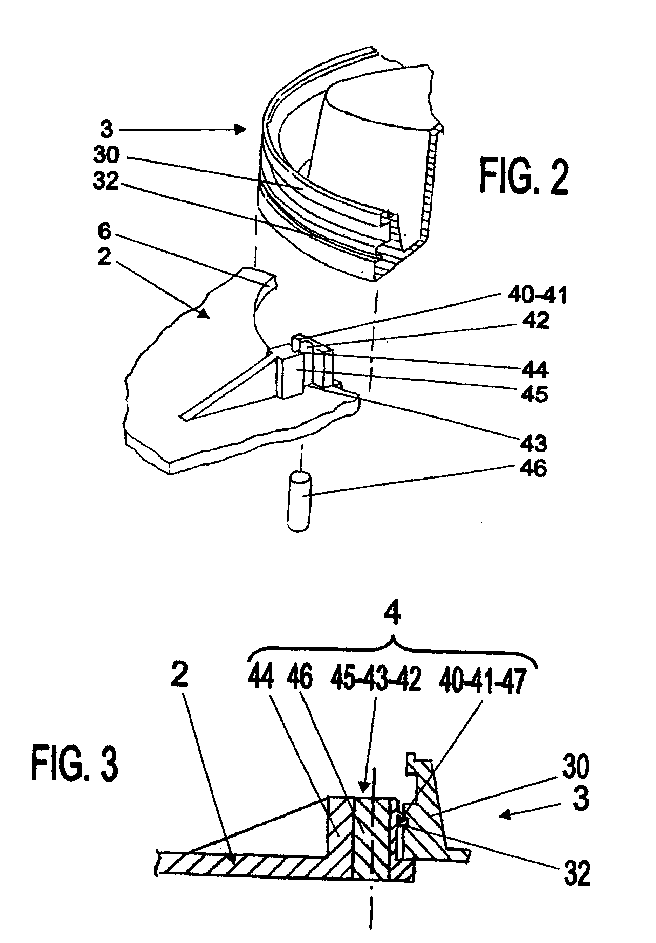

Fig. 2 shows a partial exploded view of the fixing device according to the embodiment of the present invention; and
Fig. 3 shows a partial cross-sectional view of the fixing device of Fig 2. assembled together.

Referring to the accompanying drawings, there is shown an embodiment of the present invention for use in an external rear-view mirror assembly of an automotive vehicle, such as a truck, bus or the like. The rear-view mirror assembly includes a mirror plate set 1, a mirror cover 2 in which is fixed the mirror plate set 1, a control mechanism 3 for adjusting the positioning of the mirror plate set 1, a fixing device 4 for fixing the mirror cover 2 to the control mechanism 3, a housing 5 in which is fixed the control mechanism 3 and which accommodates associated components and a support (not illustrated) for fixing to the automotive vehicle to which is fixed the housing 5.

The mirror cover 2 comprises a plate with one of its sides fixed to the mirror plate set 1 and which has a wide circular opening 6 in which part of the control mechanism 3 is disposed.

The control mechanism 3 includes a universal gasket at its base in the form of a ring 30 which is fixed to the mirror cover 2 using the fixing device 4 and has another part 31 which contains a device for adjusting the position of the mirror plate manually or electrically and which is fixed in the bottom of the housing 5.

The fixing device 4 is formed by at least three fixing parts, which are regularly distributed around the opening. In the illustrated embodiment four fixing parts are provided.

In the present invention, each fixing part comprises; a flange 40 of "L" shaped cross section disposed on the edge of the opening 6 of the mirror cover 2 and is formed by an axial section which projects perpendicularly to the geometric axis of the opening 6 from the side of the mirror cover 2 which opposes the side receiving the mirror plate set 1. The flange 40 is arranged so that it is disposed adjacent to the ring 30 of the control mechanism 3 and has a radial section which radially projects inward into the opening 6 so as to support the ring 30. The side of the axial section of the flange 40 which is directed to the ring 30 has a cuneiform projection or wedge 41 which is coupled to a corresponding groove 32 formed in the ring 30 and the opposite side of the axial section has a gutter 42 extending in a direction which is parallel with the geometric axis of the opening 6. The fixing part also comprises a crossing hole 43 made in the mirror cover 2 and adjacent to the gutter 42 and a stop 44 which projects from the side of the mirror cover 2 which is opposite the side which receives the mirror plate set 1 and which is radially aligned to and spaced from the flange 40 in correspondence with the hole 43 of the mirror cover 2. A complementary gutter 45 in parallel with the gutter 42 is disposed on the side of the stop 42 which faces the flange 40. A pin 46 is received under pressure in the hole 43 of the mirror cover 2 and in the seat defined by the gutters 42 and 45 of the flange 40 and the stop 44 and compresses the cuneiform projection or wedge 41 of the axial section of the flange 40 against the peripheral groove 32 of the ring 30 of the control mechanism 3, thus securing the control mechanism 3 to the mirror.

The cuneiform projection or wedge 41 has a surface 47 at its side which is directed to the side from which the control mechanism is introduced and which is inclined and descends in the direction of the center of the opening 6.

The mirror cover 2, fixing device 4, gasket 30-31 of the control mechanism 3, housing 5 and other associated components are obtained from the usual plastic material used in the manufacture of rear-view mirrors.

In order to fix the cover mirror 2 to the control mechanism 3, the ring 30 of the control mechanism 3 is introduced within the flange 40 of each of the fixing parts and passes over the inclined sides 47 of the cuneiform projections or wedges 41 of the flanges 40 so as to force the cuneiform projections or wedges 41 to flex sufficiently to allow the groove of the ring to be disposed next to the cuneiform projections or wedges 41 so that the cuneiform projections or wedges 41 couple with the groove. The pins 46 are then introduced under pressure through the holes 43 and into the seats defined by the gutters 42, 45 radially forcing against the flanges 40 and the corresponding stops 44 so as to make them slightly bend and consequently force the cuneiform projections or wedges 41 towards the ring 30 so to provide a more intimate coupling with the groove 32 of ring 30 of the control mechanism 3, and thereby complete the connection between the control mechanism 3 and the mirror cover 2.

The fixing device of the present invention solves the problems of a conventional fixing device because its construction and assembling is simpler than for the conventional fixing device.

An advantage of the present invention is that the fixing device is not affected by vibration during the course of the useful life of the mirror.

The fixing device of the present invention has components which are made from a suitable material and has an adequate structure in order to avoid the fatigue and loosening of the connection formed by the fixing device.

Another advantage of the present invention is that the manufacturing process of the mirror is not significantly complicated.

## Claims

1. A device for fixing a mirror cover (2) to a control mechanism (3), comprising at least three spaced apart fixing parts and a universal gasket , the universal gasket being carried on the base of the control mechanism (3) and having a ring (30) and a groove (32) formed in the periphery of the ring (30), each fixing part comprising a flange (40) carried on the edge of an opening (6) formed in the mirror cover (2) for supporting the base of the control mechanism (3), a stop (44) projecting from the mirror cover (2) and radially aligned and spaced apart from the flange (40), a seat (42, 43, 45) comprising gutters (42, 45) formed in the opposing faces of the flange (40) and the stop (44) and a hole (43) formed in a region of the mirror cover (2) within the space between the flange (40) and the stop (44), and a pin (46), the flange (40) having a cuneiform projection or wedge (41) being arranged so as to couple with the groove (32) of the ring (30) and the pin (46) being received under pressure through the hole (43) and between the gutters (42, 45) so as to press the projection against the groove (32) of the ring (30) when the projection is coupled with the groove (32).

2. A fixing device as claimed in claim 1, wherein the flange (40) is substantially of "L" shaped cross section and has an axial section which projects substantially perpendicular from the side of the mirror cover (2) which is opposite to the side which receives a mirror plate set (1) and a radial branch which radially projects inside the opening (6) so as to support the perimeter of the base of the control mechanism (3).

3. A fixing device as claimed in claim 2, wherein the cuneiform projection or wedge (41) is formed on the face of the axial section and directed to the base of the control mechanism (3).

4. A fixing device as claimed in claim 2 or 3, wherein the gutter (42) is formed on the axial section of the flange and extends in a direction parallel to the geometric axis of the opening (6).

5. A fixing device as claimed in claim 2, 3 or 4, wherein the pin (46) when received in the seat (42,43,45) compresses the cuneiform projection of wedge (41) of the axial section of the flange (40) against the peripheral groove (32) of the ring (30) promoting the fixing of the control mechanism (3) to the mirror cover (2)

6. A fixing device as claimed in any preceding claim, wherein the hole (43) is intercalated and arranged so that the hole and the ends of the gutters (42, 45) are aligned.

7. A fixing device as claimed in any preceding claim, wherein the stop (44) is projected from the side of the mirror cover (2) which is opposite to the side which receives the mirror plate set (1) and its face, which is directed to the flange (40), is provided with the gutter (45) in parallel with and complementary to the gutter (42).

8. A fixing device as claimed in any preceding claim , wherein at least some of the surface of the cuneiform projection or wedge (41) which is directed to the side from which the control mechanism (3) is introduced is inclined and descending from the periphery to the centre of the opening (6).

9. A mirror assembly comprising a mirror cover (2) , a mirror plate (1) fixed to one face of the mirror cover (2), the mirror cover (2) having a central circular opening (6) in which is disposed a control mechanism (3), the control mechanism (3) having one part in the form of a kind of universal gasket at the base of the control mechanism (3) which is in the form of a ring (30) and which is fixed to the mirror cover (2) using a fixing device (4) and another part (31) which contains the device for adjusting the position of the mirror plate (1) either manually or electrically and which is seated in the bottom of a housing (5) of the mirror, whereby the fixing device (4) is formed by at least three regularly spaced apart fixing parts, each fixing part comprising a flange (40) disposed on an edge of the opening (6) of the mirror cover (2) adjacent and supporting the base of the control mechanism (3), the flange (40) having a cuneiform projection or wedge (41) which couples with a groove (32) of the ring (30), and in that a stop (44) projects from the mirror cover (2) and is radially aligned with and spaced apart from the flange (40) and in that the fixing device includes a seat (42, 43, 45) comprising gutters (42,45) formed in the opposing faces of the flange (40) and the stop (44) and a hole (43) formed in a region of the mirror cover (2) within the space between the flange (40) and the stop (44), and a pin (46), the flange (40) being arranged so as to couple with the groove (32) of the ring (30) and the pin (46) being received under pressure through the hole (43) and between the gutters (42, 45) so as to press the projection against the groove (32) of the ring (30) when the projection is coupled with the groove (32).

## Patentansprüche

1. Vorrichtung zum Befestigen einer Spiegelabdeckung (2) an einem Verstellmechanismus (3), enthaltend mindestens drei beabstandete Befestigungsteile sowie eine Universaldichtung, welche Universaldichtung auf der Basis des Verstellmechanismus (3) angeordnet ist und einen Ring (30) sowie eine im Umfang des Ringes (30) gebildete Nut (32) hat, wobei jeder Befestigungsteil einen Flansch (40) enthält, der am Rand einer in der Spiegelabdeckung (2) gebildeten Öffnung (6) zum Haltern der Basis des Verstellmechanismus (3) angeordnet ist, einen von der Spiegelabdeckung (2) vorragenden und radial mit dem Flansch (40) fluchtend ausgerichteten und von diesem beabstandeten Anschlag (44), einen Sitz (42, 43, 45), der in den einander gegenüberliegenden Flächen des Flansches (40) und des Anschlags (44) gebildete Rinnen (42, 45) und ein in einem Bereich der Spiegelabdeckung (2) innerhalb des Raumes zwischen dem Flansch (40) und dem Anschlag 44 gebildetes Loch (43) enthält, und einen Stift (46), wobei der Flansch (40) einen keilförmigen Vorsprung oder Keil (41) aufweist, der so angeordnet ist, dass er sich mit der Nut (32) des Ringes (30) verbindet und wobei der Stift (46) unter Druck durch das Loch (43) und zwischen den Rinnen (42, 45) aufgenommen wird, so dass er den Vorsprung gegen die Nut (32 ) des Ringes (30) presst, wenn der Vorsprung mit der Nut (32) verbunden wird.

2. Befestigungsvorrichtung nach Anspruch 1, bei welcher der Flansch (40) einen im wesentlichen "L"-förmigen Querschnitt hat und einen axialen Abschnitt hat, der im wesentlichen senkrecht von der Seite der Spiegelabdeckung (2) vorragt, die der Seite gegenüberliegt, welche eine Spiegelplattengruppe (1) aufnimmt, sowie eine radiale Verzweigung, die radial innerhalb der Öffnung (6) vorragt, um so den Umfang der Basis des Verstellmechanismus (3) zu haltern.

3. Befestigungsvorrichtung nach Anspruch 2, bei welcher der keilförmige Vorsprung oder Keil (41) auf der Fläche des axialen Abschnitts gebildet ist und auf die Basis des Verstellmechanismus (3) gerichtet ist.

4. Befestigungsvorrichtung nach Anspruch 2 oder 3, bei welcher die Rinne (42) auf dem axialen Abschnitt des Flansches gebildet ist und in einer zur Richtung der geometrischen Achse der Öffnung (6) parallelen Richtung verläuft.

5. Befestigungsvorrichtung nach Anspruch 2, 3 oder 4, bei welcher der Stift (46) dann, wenn er in den Sitz (42, 43, 45) aufgenommen ist, den keilförmigen Vorsprung oder Keil (41) des axialen Abschnitts des Flansches (40) gegen die Umfangsnut (32) des Ringes (30) zusammendrückt und die Befestigung des Verstellmechanismus (3) an der Spiegelabdeckung (2) fördert.

6. Befestigungsvorrichtung nach einem der vorstehenden Ansprüche, bei welcher das Loch (43) in der Weise eingefügt und angeordnet ist, dass das Loch und die Enden der Rinnen (42, 45) fluchtend ausgerichtet sind.

7. Befestigungsvorrichtung nach einem der vorstehenden Ansprüche, bei welcher der Anschlag (44) von der Seite der Spiegelabdeckung (2) vorragt, die der Seite gegenüberliegt, welche die Spiegelplattengruppe (1) aufnimmt, und seine auf den Flansch (40) gerichtete Fläche mit der Rinne (45) parallel und komplementär zu der Rinne (42) versehen ist.

8. Befestigungsvorrichtung nach einem der vorstehenden Ansprüche, bei welcher mindestens einige der Oberflächen des keilförmigen Vorsprungs oder Keiles (41), die zu der Seite gerichtet sind, von welcher der Verstellmechanismus (3) eingeführt wird, geneigt sind und von dem Umfang zur Mitte der Öffnung (6) abfallen.

9. Spiegelanordnung, enthaltend eine Spiegelabdeckung (2), eine Spiegelplatte (1), die an einer Fläche der Spiegelabdeckung (2) befestigt ist, welche Spiegelabdeckung (2) eine zentrale kreisförmige Öffnung (6) hat, in welcher ein Verstellmechanismus (3) angeordnet ist, welcher Verstellmechanismus (3) einen Teil in Form einer Art Universaldichtung an der Basis des Verstellmechanismus (3) aufweist, die in Form eines Ringes (30) vorliegt und die an der Spiegelabdeckung (2) unter Verwendung einer Befestigungseinrichtung (4) und eines weiteren Teiles (31) befestigt ist, welcher die Einrichtung zum Einstellen der Position der Spiegelplatte (1) entweder von Hand oder elektrisch enthält und welcher in dem Boden eines Gehäuses (5) des Spiegels eingesetzt ist, wobei die Befestigungseinrichtung (4) durch mindestens drei gleichmäßig beabstandete Befestigungsteile gebildet ist, wobei jeder Befestigungsteil einen Flansch (40) enthält, der an einem Rand der Öffnung (6) der Spiegelabdeckung (2), der Basis des Verstellmechanismus (3) benachbart und diesen halternd, angeordnet ist, welcher Flansch (40) einen keilförmigen Vorsprung oder Keil (41) hat, der mit einer Nut (32) des Ringes (30) in Verbindung kommt, und wobei ein Anschlag (44) von der Spiegelabdeckung (2) vorragt und mit dem Flansch (40) fluchtend ausgerichtet und von diesem beabstandet ist, und wobei die Befestigungseinrichtung einen Sitz (42, 43, 45) enthält, der Rinnen (42, 45) enthält, die in den einander gegenüberliegenden Flächen des Flansches (40) und des Anschlags (44) gebildet sind, sowie einen in einem Bereich der Spiegelabdeckung (2) innerhalb des Raumes zwischen dem Flansch (40) und dem Anschlag (44) gebildetes Loch (43), sowie einen Stift (46), wobei der Flansch (40) so angeordnet ist, dass er sich mit der Nut (32) des Ringes (30) verbindet und der Stift (46) unter Druck durch das Loch (43) und zwischen den Rinnen (42, 45) aufgenommen wird, um so den Vorsprung gegen die Nut (32) des Ringes (30) zu pressen, wenn der Vorsprung mit der Nut (32) verbunden wird.

## Revendications

1. Dispositif pour fixer un couvre-rétroviseur (2) à un mécanisme de commande (3), comprenant au moins trois pièces de fixation espacées et un joint plat universel, le joint plat universel se trouvant sur la base du mécanisme de commande (3) et possédant un anneau (30) et une rainure (32) formée sur la périphérie de l'anneau (30), chaque pièce de fixation comprenant un épaulement (40) se trouvant sur le bord d'une ouverture (6) formée dans le couvre-rétroviseur (2) pour supporter la base du mécanisme de commande (3), une butée (44) faisant saillie à partir du couvre-rétroviseur (2), alignée radialement sur l'épaulement (40) et espacée de celui-ci, une assise (42, 43, 45) comprenant des gorges (42, 45) formées dans les faces opposées de l'épaulement (40) et de la butée (44) et un trou (43) formé dans une région du couvre-rétroviseur (2) à l'intérieur de l'espace entre l'épaulement (40) et la butée (44), et un axe (46), l'épaulement (40) ayant une saillie ou clavette cruciforme (41) agencée de façon à s'accoupler avec la rainure (32) de l'anneau (30) et l'axe (46) étant reçu sous pression à travers le trou (43) et entre les gorges (42, 45) de façon à presser la saillie contre la rainure (32) de l'anneau (30) lorsque la saillie est accouplée à la rainure (32).

2. Dispositif de fixation selon la revendication 1, dans lequel l'épaulement (40) a une section transversale sensiblement en forme de "L" et a une section axiale qui fait saillie de manière sensiblement perpendiculaire à partir du côté du couvre-rétroviseur (2) qui est à l'opposé du côté qui reçoit un ensemble plaque de rétroviseur (1) et une branche radiale qui fait saillie radialement à l'intérieur de l'ouverture (6) de façon à supporter le périmètre de la base du mécanisme de commande (3).

3. Dispositif de fixation selon la revendication 2, dans lequel la saillie ou clavette cruciforme (41) est formée sur la face de la section axiale et orientée vers la base du mécanisme de commande (3).

4. Dispositif de fixation selon la revendication 2 ou 3, dans lequel la gorge (42) est formée sur la section axiale de l'épaulement et s'étend dans une direction parallèle à l'axe géométrique de l'ouverture (6).

5. Dispositif de fixation selon la revendication 2, 3 ou 4, dans lequel l'axe (46) lorsqu'il est logé dans l'assise (42, 43, 45) comprime la saillie ou clavette cruciforme (41) de la section axiale de l'épaulement (40) contre la rainure périphérique (32) de l'anneau (30) assurant la fixation du mécanisme de commande (3) au couvre-rétroviseur (2).

6. Dispositif de fixation selon l'une quelconque des revendications précédentes, dans lequel le trou (43) est intercalé et agencé de telle sorte que le trou et les extrémités des gorges (42, 45) soient alignés.

7. Dispositif de fixation selon l'une quelconque des revendications précédentes, dans lequel la butée (44) fait saillie depuis le côté du couvre-rétroviseur (2) qui est à l'opposé du côté qui reçoit l'ensemble plaque de rétroviseur (1) et sa face, qui est orientée vers l'épaulement (40), est pourvue de la gorge (45) de façon parallèle et complémentaire à la gorge (42).

8. Dispositif de fixation selon l'une quelconque des revendications précédentes, dans lequel au moins une partie de la surface de la saillie ou clavette cruciforme (41) qui est orientée vers le côté à partir duquel est introduit le mécanisme de commande (3) est inclinée et descend depuis la périphérie vers le centre de l'ouverture (6).

9. Ensemble rétroviseur comprenant un couvre-rétroviseur (2), une plaque de rétroviseur (1) fixée à une face du couvre-rétroviseur (2), le couvre-rétroviseur (2) ayant une ouverture circulaire centrale (6) dans laquelle est agencé un mécanisme de commande (3), le mécanisme de commande (3) ayant une partie de la forme d'une sorte de joint plat universel à la base du mécanisme de commande (3) qui est de la forme d'un anneau (30) et qui est fixé au couvre-rétroviseur (2) à l'aide d'un dispositif de fixation (4) et une autre partie (31) qui contient le dispositif pour régler la position de la plaque de rétroviseur (1) soit manuellement soit électriquement et qui est positionné dans la partie inférieure d'un logement (5) du rétroviseur, moyennant quoi le dispositif de fixation (4) est formé d'au moins trois pièces de fixation espacées régulièrement, chaque pièce de fixation comprenant un épaulement (40) agencé sur un bord de l'ouverture (6) du couvre-rétroviseur (2) adjacent et supportant la base du mécanisme de commande (3), l'épaulement (40) ayant une saillie ou clavette cruciforme (41) qui s'accouple avec une rainure (32) de l'anneau (30), et **caractérisé en ce qu'**une butée (44) fait saillie à partir du couvre-rétroviseur (2), et est alignée radialement sur l'épaulement (40) et espacée de celui-ci et **en ce que** le dispositif de fixation comprend une assise (42, 43, 45) comprenant des gorges (42, 45) formées dans les faces opposées de l'épaulement (40) et de la butée (44) et un trou (43) formé dans une région du couvre-rétroviseur (2) à l'intérieur de l'espace entre l'épaulement (40) et la butée (44), et un axe (46), l'épaulement (40) étant agencé de façon à s'accoupler avec la rainure (32) de l'anneau (30) et l'axe (46) étant positionné sous pression à travers le trou (43) et entre les gorges (42, 45) de façon à presser la saillie contre la rainure (32) de l'anneau (30) lorsque la saillie est accouplée avec la rainure (32).
